# EUROPEAN PATENT SPECIFICATION

(11) **EP 2 330 279 B1**
(45) Date of publication and mention of the grant of the patent: **22.08.2012**
(21) Application number: 10169419.8
(22) Date of filing: 13.07.2010
(51) Int. Cl.: F02B 61/02, F01M 13/00, F01M 13/04, F02B 75/16

(54) **Motorcycle**
Motorrad
Motocyclette

(30) Priority: 02.12.2009 JP 2009274415
(43) Date of publication of application: 08.06.2011
(73) Proprietor: Yamaha Hatsudoki Kabushiki Kaisha, Iwata-shi, Shizuoka 438-8501 (JP)
(72) Inventor: Nishimura, Hidehiro, Shizuoka 438-8501 (JP); Igarashi, Takeshi, Shizuoka 438-8501 (JP); Ootsu, Toyoharu, Shizuoka 438-8501 (JP)
(74) Representative: Zimmermann, Tankred Klaus

(56) References cited:
- DE-A1- 10 311 013
- JP-A- 5 086 829

## Description

### TECHNICAL FIELD

The present invention relates to a motorcycle.

### BACKGROUND ART

In the motorcycles, fuel is transferred to a combustion chamber of an engine through an intake path. Then, the transferred fuel may reach a crank case through clearance between a cylinder and a piston without being burned. In this case, the fuel is mixed with lubricant oil stored in the crank case. The lubricant oil increases its temperature in response to engine revolution. The unburned fuel, mixed with the lubricant oil, is accordingly changed into a gaseous state. The gaseous fuel (hereinafter referred to as "blow-by gas") is transferred to the intake path from the crank case. The blow-by gas herein contains fine-particle lubricant oil. Therefore, the lubricant oil is desirably separated from the blow-by gas before the blow-by gas is returned from the crank case to the intake path.

To cope with this, Japan Laid-open Patent Application Publication No. JP-A-H05-086829 describes a motor cycle provided with an oil catch tank configured to separate oil from blow-by gas. The oil catch tank is disposed over the cylinder of the engine, and is connected to a crank case through a gas supply pipe. Further, the oil catch tank is connected to an air cleaner through a gas discharge pipe. The blow-by gas is transferred from the crank case to the oil catch tank through the gas supply pipe. The blow-by gas then rapidly expands within the oil catch tank. Accordingly, the oil is separated from the blow-by gas. After separation of the oil, the blow-by gas is transferred from the oil catch tank to the air cleaner through the gas discharge pipe, and is again supplied into the cylinder. On the other hand, the oil, separated from the blow-by gas within the oil catch tank, is retuned from the oil catch tank to an oil tank disposed beneath the engine through an oil return pipe. Then, the returned oil is again used for lubrication of various components of the engine.

### DISCLOSURE OF THE INVENTION

The present invention has an object to provide a motorcycle configured to efficiently separate alcohol from blow-by gas under a condition that enlargement of the vehicle is inhibited.
This object is achieved by a motorcycle according to claim 1.

A motorcycle of the present invention includes an engine, an intake path, an air cleaner, a separation device, a first path, and a second path. The engine includes a cylinder portion and a crank case. The intake path is connected to the cylinder portion. The air cleaner is provided to the intake path. The air cleaner is at least partially disposed to the rearward of the cylinder portion. The separation device is at least partially disposed to the forward of the cylinder portion, and is disposed so as not to overlap with the cylinder portion in a plan view. The first path connects the inside of the crank case and the separation device. The second path connects the separation device and the intake path while passing above the engine.

### ADVANTAGEOUS EFFECTS OF THE INVENTION

Alcohol-containing fuel has been recently used as the motorcycle engine fuel. It was found out that when the alcohol-containing fuel is used by the motorcycles, a phenomenon is caused that the alcohol enters the crank case through clearance between the cylinder and the piston without being burned, and is mixed with lubricant oil stored therein. When the lubricant oil herein increases its temperature, blow-by gas containing the alcohol and the lubricant oil enters the oil catch tank.

Now, alcohol has a narrow boiling-point range different from a boiling-point range of gasoline. For example, ethanol has a boiling-point range from roughly 78 degrees Celsius to roughly 80 degrees Celsius, whereas gasoline has a boiling-point range from roughly 30 degrees Celsius to roughly 200 degrees Celsius. Therefore, when oil increases its temperature and alcohol accordingly reaches its boiling point, the alcohol contained in the oil suddenly evaporates and expands. Embodiments of the invention are advantageous in that it is avoided that a massive gaseous alcohol is suddenly again transferred to the cylinder through the intake path, thereby avoiding an air-fuel ratio of mixture gas to be supplied to the engine to deviate from a proper value. To inhibit deviation of the air-fuel ratio from the proper value, embodiments of the invention separate a part of massive gaseous alcohol, together with the lubricant oil, from the blow-by gas within the oil catch tank by changing the gaseous alcohol into a liquid state. Embodiments of the invention avoid an increase in temperature within the oil catch tank is kept high by engine heat, thereby enhancing the changing of gaseous alcohol into a liquid state within the oil catch tank in the motorcycle. Embodiments provide for a sufficient separation of alcohol from blow-by gas. In accordance with embodiments of the invention this is achieved by providing an oil catch tank having a sufficiently large capacity without enlarging the vehicle.

According to the motorcycle of the present invention, the separation device is at least partially disposed to the forward of the cylinder portion. Further, the separation device is disposed so as not to overlap with the cylinder portion in a plan view. In other words, the separation device is disposed at a position where the separation device receives less thermal impact of the engine and more wind in traveling of the motorcycle than a conventional structure that the separation device is disposed over the cylinder portion. Therefore, cooling performance of the separation device can be improved, and liquefaction and separation of alcohol from blow-by gas in the separation device can be promoted. Consequently, it is possible to efficiently separate alcohol from blow-by gas under a condition that enlargement of the motorcycle is inhibited.

According to the motorcycle of the present invention, blow-by gas, containing alcohol having not separated from the blow-by gas in the separation device, is transferred to the intake path through the second path. Further, the second path, connecting the separation device and the intake path, passes above the engine. Therefore, temperature of the second path is increased by heat discharged by the engine. It is thereby possible to inhibit gaseous alcohol, to be transferred from the separation device to the intake path, from being changed into a liquid state within the second path. Consequently, it is possible to efficiently return gaseous alcohol, having not been separated from blow-by gas in a liquid state, to the intake path.

### BRIEF DESCRIPTION OF THE DRAWINGS

FIG.1 is a side view of a motorcycle according to a first exemplary embodiment.
FIG.2 is a front view of a part of the motorcycle according to the first embodiment.
FIG.3 is a plan view of a part of the motorcycle according to the first embodiment.
FIG.4 is a side view of a motorcycle according to a second embodiment.
FIG. 5 is a front view of a part of the motorcycle according to the second embodiment.
FIG.6 is a plan view of a part of the motorcycle according to the second embodiment.
FIG.7 is a side view of a motorcycle according to a third embodiment.
FIG.8 is a front view of the motorcycle according to the third embodiment.
FIG.9 is a plan view of the motorcycle according to the third embodiment.
FIG.10 is a side view of a motorcycle according to a fourth embodiment.
FIG.11 is a front view of the motorcycle according to the fourth embodiment.
FIG. 12 is a plan view of the motorcycle according to the fourth embodiment.
FIG.13 is a side view of a motorcycle according to one of other embodiments.
FIG.14 is a plan view of a part of the motorcycle according to one of other embodiments.

### BEST MODE FOR CARRYING OUT THE INVENTION

### <First Embodiment>

### [Structure]

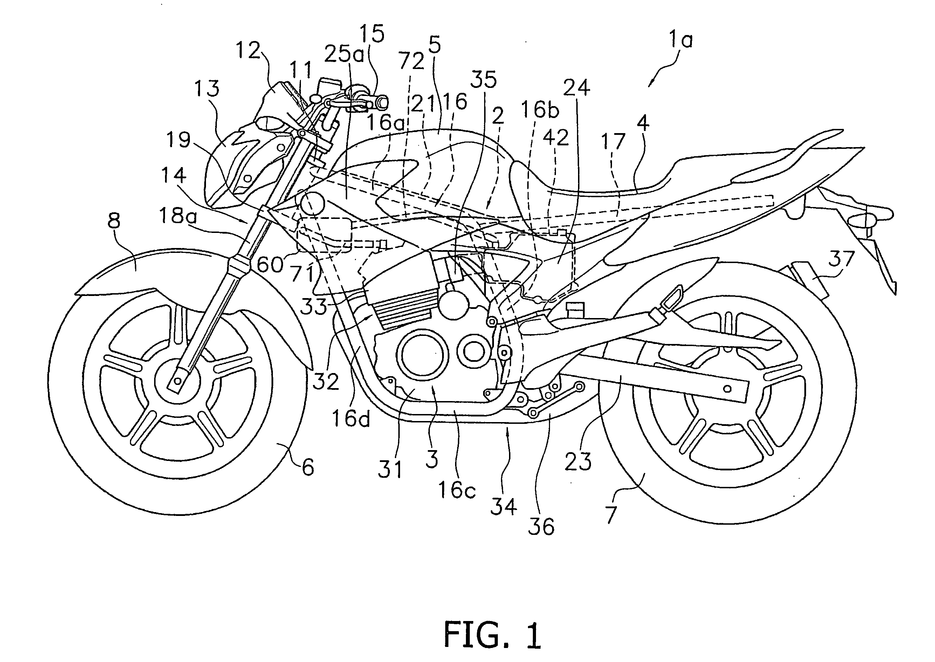

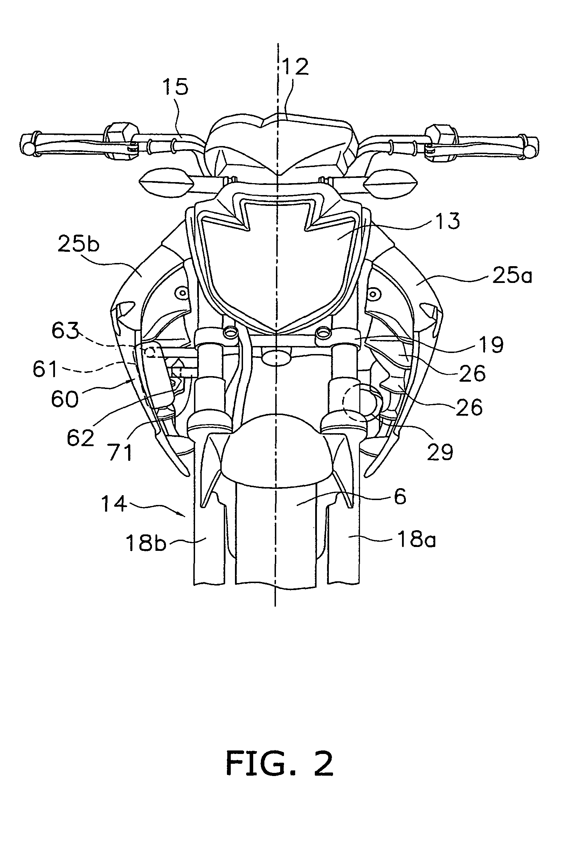

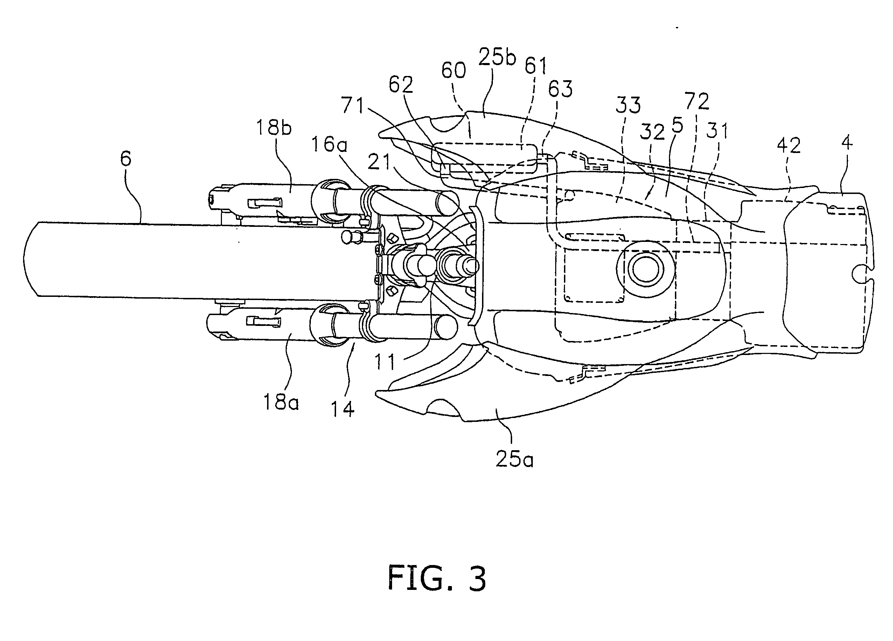

FIGS.1 to 3 illustrate a motorcycle 1a according to a first embodiment of the present invention. Specifically, FIG.1 is a side view of the motorcycle 1a. FIG. 2 is a front view of a part of the motorcycle 1a. FIG.3 is a plan view of a part of the motorcycle 1a. It should be noted that the terms "right" and "left" hereinafter refer to right and left directions seen from a rider riding on the motorcycle 1a. The motorcycle 1a includes a vehicle body frame 2, an engine 3, a seat 4, a fuel tank 5, a front wheel 6, and a rear wheel 7.

The vehicle body frame 2 includes a head pipe 11, a front frame 16, and a rear frame 17. The head pipe 11 supports a front fork 14. A handle 15 is fixed to the upper end of the front fork 14. A meter panel unit 12 is disposed in front of the handle 15. The meter panel unit 12 includes a speed meter and a fuel meter. Further, a head light unit 13 is disposed beneath the meter panel unit 12. The front fork 14 includes a bracket 19 and a pair of a right shock absorber 18a and a left shock absorber 18a (see FIG.2). The shock absorbers 18b, 18a, as paired components, are disposed at a distance in a right-and-left direction (hereinafter referred to as a transverse direction) of the vehicle body of the motorcycle 1a. The front wheel 6 is supported in a rotatable state at the bottom of the front fork 14, i.e., at the bottoms of the shock absorbers 18b, 18a. In other words, the right shock absorber 18b is disposed on the right side of the front wheel 6. The left shock absorber 18a is disposed on the left side of the front wheel 6. The front wheel 6 is positioned to the forward of the engine 3. A front fender 8 is disposed over the front wheel 6. The bracket 19 supports the upper portions of the shock absorbers 18b, 18a.

The front frame 16 is composed of a pair of right pipe member and a left pipe member bent at plural positions. It should be noted that FIG.1 illustrates only left-side one of the pair of the right pipe member and the left pipe member. The front frame 16 includes a first portion 16a, a second portion 16b, a third portion 16c, and a fourth portion 16d. The first portion 16a is linked to the head pipe 11 and is extended in a back-and-forth direction (hereinafter referred to as a longitudinal direction) of the vehicle body of the motorcycle 1a. The second portion 16b is backwardly extended from the rear end of the first portion 16a in an obliquely downward direction. The third portion 16c is extended from the bottom end of the second portion 16b to the forward. The fourth portion 16d is forwardly extended from the front end of the third portion 16c in an obliquely upward direction. The fourth portion 16d is linked to the head pipe 11. In the present embodiment, the phrase " (a component) is linked to (another component) " means not only a condition that two individual members are coupled to each other by means of a fixation method such as welding but also a condition that two portions included in a single member continue to each other.

The rear frame 17 is composed of a pair of a right pipe member and a left pipe member. It should be noted that FIG.1 illustrates only left-side one of the right and left pipe members. The rear frame 17 is linked to the front frame 16 and is extended from the front frame 16 to the rearward.

The seat 4 and the fuel tank 5 are attached to the upper portion of the vehicle body frame 2. The fuel tank 5 is disposed in front of the seat 4. The fuel tank 5 is disposed over the engine 3. Further, a recess 21 is provided to a bottom surface of the fuel tank 5 (see FIGS.1 and 3). The recess 21 is upwardly recessed and extended in the longitudinal direction. The first portion 16a of the front frame 16 is disposed in a space surrounded by the recess 21.

A swing arm 23 is coupled to the rear end of the front frame 16 while being allowed to pivot up and down. The rear wheel 7 is supported by the rear end of the swing arm 23 in a rotatable state.

A side cover 24 is attached to the lateral side of the vehicle body frame 2. The side cover 24 is disposed for covering a lateral side of an air cleaner 42 described below.

Further, a pair of a right cover member 25b and a left cover member 25a is disposed on the both lateral sides of the front frame 16. Specifically, the right cover member 25b is disposed on the right lateral side of the front frame 16. The left cover member 25a is disposed on the left lateral side of the front frame 16. As illustrated in FIG.1, the upper portion of the left cover member 25a is positioned lateral to the fuel tank 5, and is extended from the fuel tank 5 to the forward. The front portion of the left cover member 25a covers a lateral side of the fourth portion 16d of the front frame 16. Further, the lower portion of the left cover member 25a covers a lateral side of the upper portion of a cylinder head 33 described below. As illustrated in FIG. 2, the left cover member 25a is convexly bulged in a transversely outward direction. The left cover member 25a is provided with plural ribs 26 in its inner surface. The ribs 26 are extended in the longitudinal direction. The right cover member 25b and the left cover member 25a are symmetric to each other with respect to a vehicle center line perpendicular to the transverse direction.

The engine 3 is an air-cooled four-stroke engine. The engine 3 is configured to transmit driving force to the rear wheel 7 through a chain (not illustrated in the figure). The engine 3 is disposed beneath the fuel tank 5 and is supported by the front frame 16. The engine 3 includes a crank case 31 and a cylinder portion 32. The crank case 31 accommodates a crank shaft (not illustrated in the figure). The cylinder portion 32 is attached to the top of the crank case 31. The cylinder portion 32 accommodates a piston (not illustrated in the figure). The piston is herein coupled to the crank shaft.

The cylinder portion 32 includes the cylinder head 33. An exhaust path 34 and an intake path 35 are connected to the cylinder head 33.

The exhaust path 34 is a path through which exhaust gas discharged from a combustion chamber within the cylinder portion 32 passes. An exhaust pipe 36 and a muffler 37 are provided to the exhaust path 34. The exhaust pipe 36 is connected to the front surface of the cylinder head 33. The exhaust pipe 36 is backwardly bent in front of the engine 3. Accordingly, the exhaust pipe 36 is disposed along the outer periphery of the engine 3. The muffler 37 is connected to the rear portion of the exhaust pipe 36, and is disposed lateral to the rear wheel 7.

The intake path 35 is connected to the cylinder portion 32. The intake path 35 is a path for delivering air to the combustion chamber within the cylinder portion 32. A throttle valve (not illustrated in the figure) and the air cleaner 42 are provided to the intake path 35. The throttle valve is configured to regulate an intake amount of the engine 3.

The air cleaner 42 is aligned with the engine 3 in the longitudinal direction. The air cleaner 42 is disposed to the rearward of the cylinder portion 32. Specifically, the air cleaner 42 is disposed to the rearward of the cylinder head 33. Further, the air cleaner 42 is disposed to the inward of the side cover 24 in the transverse direction. In other words, the air cleaner 42 is disposed closer to the vehicle-body center line perpendicular to the transverse direction than the side cover 24 is. The front portion of the air cleaner 42 is disposed over the crank case 31, whereas the rear portion of the air cleaner 42 is disposed to the rearward of the crank case 31. The air cleaner 42 is disposed beneath the rear frame 17. Further, the air cleaner 42 is disposed beneath the rear portion of the fuel tank 5 and the front portion of the seat 4.

Further, a catch tank 60 is connected to the air cleaner 42 and the engine 3. The catch tank 60 is a separation device configured to separate gaseous alcohol from blow-by gas. The catch tank 60 is disposed to the forward of the cylinder portion 32. Further, the catch tank 60 is disposed so as not to overlap with the cylinder portion 32 in a plan view, as illustrated in FIG.3. Yet further, the catch tank 60 is disposed between the left cover member 25a and the right cover member 25b in the transverse direction. Specifically, the catch tank 60 is disposed to the inward of the right cover member 25b in the transverse direction. In other words, the catch tank 60 is disposed closer to the vehicle-body center line perpendicular to the transverse direction than the right cover member 25b is. Simultaneously, the catch tank 60 is disposed lateral to the fuel tank 5 in a plan view. The catch tank 60 is disposed to the forward of the cylinder portion 32 while being disposed to the outward of the cylinder portion 32 in the transverse direction. In other words, the catch tank 60 is disposed to the forward of the cylinder portion 32, while being transversely disposed further away from the vehicle-body center line perpendicular to the transverse direction than the cylinder portion 32 is. The catch tank 60 is disposed between the fuel tank 5 and the right cover member 25b in the transverse direction. Further, the catch tank 60 is disposed between the right shock absorber 18b and the right cover member 25b in a front view, as illustrated in FIG.2. Therefore, the catch tank 60 is disposed in a viewable position in a front view of the vehicle body. Further, the catch tank 60 is positioned higher than the front wheel 6 in a side view. The catch tank 60 is positioned higher than the exhaust pipe 36. A horn 29 is disposed in the inside of the left cover member 25a as illustrated in FIG.2.

As illustrated in FIGS. 2 and 3, the catch tank 60 is elongated further in the longitudinal direction and an up-and-down direction (hereinafter referred to as a vertical direction) than in the transverse direction. The catch tank 60 is thinly shaped in the transverse direction. Further, the catch tank 60 is elongated further in the longitudinal direction than in the vertical direction. The catch tank 60 includes a tank body 61, a first connection port 62, and a second connection port 63. The tank body 61 is a member having a hollow space in its inside. The tank body 61 is elongated further in the longitudinal direction and the vertical direction than in the transverse direction. Further, the tank body 61 is thinly shaped in the transverse direction. Yet further, the tank body 61 is elongated further in the longitudinal direction than in the vertical direction.

The first connection port 62 is provided to the left lateral surface of the tank body 61. One end of a first hosepipe 71 is connected to the first connection port 62. The other end of the first hosepipe 71 is connected to the cylinder head 33 of the engine 3. The first hosepipe 71 communicates with the inside of the crank case 31 through a cam-chain chamber (not illustrated in the figure) within the cylinder portion 32. The first hosepipe 71 composes a first path connecting the inside of the crank case 31 of the engine 3 and the inside of the tank body 61. The first hosepipe 71 is extended from the cylinder head 33 to the forward and passes beneath the fuel tank 5 (see FIG.1).

The second connection port 63 is provided to the rear surface of the tank body 61. The second connection port 63 is positioned higher than the first connection port 62. One end of a second hosepipe 72 is connected to the second connection port 63. The other end of the second hosepipe 72 is connected to the air cleaner 42. The second hosepipe 72 composes a second path connecting the inside of the catch tank 60 and the intake path 35. As illustrated in FIG.1, the second hosepipe 72 is extended in the longitudinal direction while passing above the engine 3. The second hosepipe 72 is disposed along the first portion 16a of the front frame 16. The second hosepipe 72 is supported by plural support portions (not illustrated in the figure) provided to the first portion 16a. The second hosepipe 72 is bent towards the right cover member 25b in front of the cylinder portion 32, and is thus extended in the transverse direction (see FIG.3). In a side view, the second hosepipe 72 is disposed in a posture that it is convexly curved to the upward. Therefore, the second hosepipe 72 does not include a portion convexly flexed to the downward.

### [Blow-by Gas Processing]

Next, blow-by gas processing executed when alcohol-containing fuel is used in the motorcycle 1a will be hereinafter explained. It should be noted that alcohol has a feature that it is easily changed into a gaseous state because of its low boiling point different from a boiling point of lubricant oil. For example, ethanol has a boiling-point range from roughly 78 degrees Celsius to roughly 80 degrees Celsius. Further, alcohol has a feature that it is suddenly changed into a gaseous state once reaching its boiling point because of its narrow boiling-point range different from a boiling-point range of gasoline.

First, when fuel, containing alcohol and gasoline, reaches the inside of the crank case 31 from the combustion chamber of the engine 3 through clearance between the piston and the cylinder portion 32, alcohol and gasoline, contained in the fuel, are mixed with lubricant oil stored within the crank case 31. Next, when the lubricant oil increases its temperature in response to operation of the engine 3 and alcohol accordingly reaches its boiling point, alcohol mixed with the lubricant oil is suddenly evaporated.

Blow-by gas, containing the gaseous alcohol and gasoline, is transferred from the inside of the crank case 31 to the inside of the catch tank 60 through the cam-chain chamber within the cylinder portion 32, the first hosepipe 71, and the first connection port 62. Alcohol and gasoline, contained in the blow-by gas, are partially changed into a liquid state within the catch tank 60, and are thus separated from the blow-by gas. The rest of the alcohol is transferred to the air cleaner 42 through the second connection port 63 and the second hosepipe 72, while being kept contained in the blow-by gas together with the gasoline. Then, the blow-by gas joins the mixed gas and is supplied to the engine 3 through the intake path 35. It should be noted that alcohol and gasoline, changed into a liquid state within the catch tank 60, are gradually changed in a gaseous state within the catch tank 60. Accordingly, they are transferred to the air cleaner 42 little by little and are then supplied to the engine 3.

### [Features]

### (1)

According to the motorcycle 1a of the present embodiment, the catch tank 60 is positioned to the forward of the cylinder portion 32. Further, the catch tank 60 is disposed so as not to overlap with the cylinder portion 32 in a plan view. In other words, the catch tank 60 is disposed at a position where the catch tank 60 receives less thermal impact of the engine 3 and more wind in traveling of the motorcycle 1a than a conventional structure that the catch tank 60 is disposed over the cylinder portion 32. Accordingly, cooling performance of the catch tank 60 can be improved, and liquefaction and separation of alcohol and gasoline can be promoted within the catch tank 60. Therefore, it is possible to inhibit increase in capacity of the catch tank 60. Consequently, it is possible to efficiently separate alcohol and gasoline from blow-by gas under a condition that enlargement of the vehicle is inhibited.

Further, according to the motorcycle 1a of the present embodiment, the second hosepipe 72, connecting the catch tank 60 and the intake path 35, passes above the engine 3. Therefore, temperature of the second hosepipe 72 is increased by heat discharged by the engine 3. It is thereby possible to inhibit gaseous alcohol and gaseous gasoline, to be transferred from the catch tank 60 to the intake path 35, from being changed into a liquid state within the second hosepipe 72. Consequently, it is possible to efficiently return alcohol and gasoline, remained in a gaseous state without being separated as liquid, to the intake path 35.

Further, alcohol, changed into a gaseous state within the crank case 31, passes through the catch tank 60 with large capacity and is then again returned to the combustion chamber of the engine 3. If gaseous alcohol is returned to the combustion chamber of the engine 3 without passing through the catch tank 60, massive blow-by gas of high alcohol content is transferred to the combustion chamber of the engine 3 all at once, because alcohol has a feature that it is suddenly changed into a gaseous state at predetermined temperature. This may result in large deviation of an air-fuel ratio of mixture gas to be supplied to the combustion chamber from a target value. According to the motorcycle 1a of the present embodiment, however, gaseous alcohol can be partially changed into a liquid state within the catch tank 60. It is therefore possible to inhibit massive blow-by gas of high alcohol content from being returned to the combustion chamber of the engine 3 all at once. Consequently, it is possible to inhibit large deviation of an air-fuel ratio of mixture gas to be supplied to the combustion chamber from a target value.

### (2)

According to the motorcycle 1a of the present embodiment, the catch tank 60 is disposed lateral to the fuel tank 5 in a plan view. In other words, the catch tank 60 is disposed in a position where it receives less thermal impact of the engine 3 and easily receives wind in travelling of the motorcycle 1a. Therefore, cooling performance of the catch tank 60 can be improved. Further, enlargement of the motorcycle 1a can be inhibited.

### (3)

According to the motorcycle 1a of the present embodiment, the catch tank 60 is disposed between the left cover member 25a and the right cover member 25b in the transverse direction. Further, the catch tank 60 is disposed closer to the vehicle-body center line in the transverse direction than the right cover member 25b is. In other words, the catch tank 60 is disposed in a position where it receives less thermal impact of the engine 3 and easily receives wind in travelling of the motorcycle 1a. Therefore, cooling performance of the catch tank 60 can be improved.

Further, a lateral side of the catch tank 60 is covered with the right cover member 25b. The structure prevents the catch tank 60 from being easily seen from the outside. Therefore, aesthetic appearance of the motorcycle 1a can be improved.

### (4)

According to the motorcycle 1a of the present embodiment, the catch tank 60 is disposed between the right shock absorber 18b of the front fork 14 and the right cover member 25b in a front view. In other words, in a front view, the front fork 14 is disposed closer to the vehicle-body center in the transverse direction than the catch tank 60 is. Therefore, the catch tank 60 is disposed in a position where it receives less thermal impact of the engine 3 and easily receives wind in traveling of the motorcycle 1a. Consequently, cooling performance of the catch tank 60 can be improved.

### (5)

According to the motorcycle 1a of the present embodiment, the catch tank 60 is positioned higher than the exhaust pipe 36. In other words, the catch tank 60 is disposed in a position where it receives less thermal impact of the exhaust pipe 36. Therefore, cooling performance of the catch tank 60 can be improved.

### (6)

According to the motorcycle 1a of the present embodiment, the second hosepipe 72 is disposed along the first portion 16a of the front frame 16. In other words, the second hosepipe 72 can be supported by the first portion 16a. Therefore, it is possible to easily dispose the second hosepipe 72 even if the distance between the air cleaner 42 and the catch tank 60 is large.

### (7)

According to the motorcycle 1a of the present embodiment, the second hosepipe 72 does not include a portion convexly flexed to the downward. Therefore, even if alcohol, which is changed into a liquid state within the catch tank 60, flows into the second hosepipe 72, accumulation of the liquid alcohol can be inhibited within the second hosepipe 72. Consequently, blow-by gas can flow into the intake path 35 from the catch tank 60 without being blocked.

### (8)

According to the motorcycle 1a of the present embodiment, the catch tank 60 is disposed in a viewable position in a front view. In other words, the catch tank 60 is disposed in a position where it easily receives wind in traveling of the motorcycle 1a. Therefore, cooling performance of the catch tank 60 can be improved.

### (9)

According to the motorcycle 1a of the present embodiment, the catch tank 60 is positioned higher than the front wheel 6 in a side view. In other words, the catch tank 60 is disposed in a position where it easily receives wind in traveling of the motorcycle 1a. Therefore, cooling performance of the catch tank 60 can be improved.

### (10)

According to the motorcycle 1a of the present embodiment, the catch tank 60 is elongated further in the vertical direction and the longitudinal direction than in the transverse direction. Therefore, the catch tank 60 can ensure large capacity and simultaneously transverse enlargement of the vehicle can be inhibited.

### <Second Embodiment>

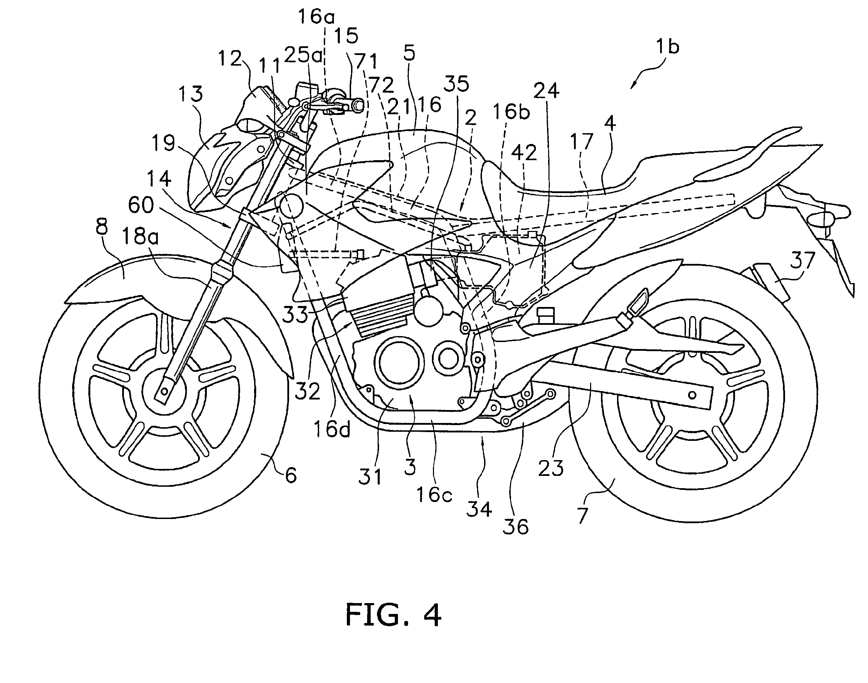

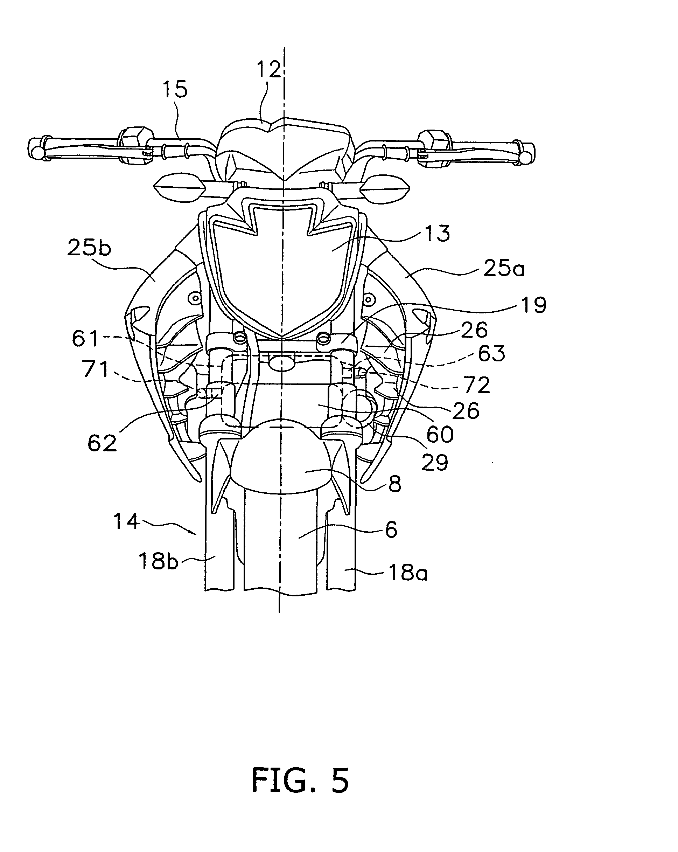

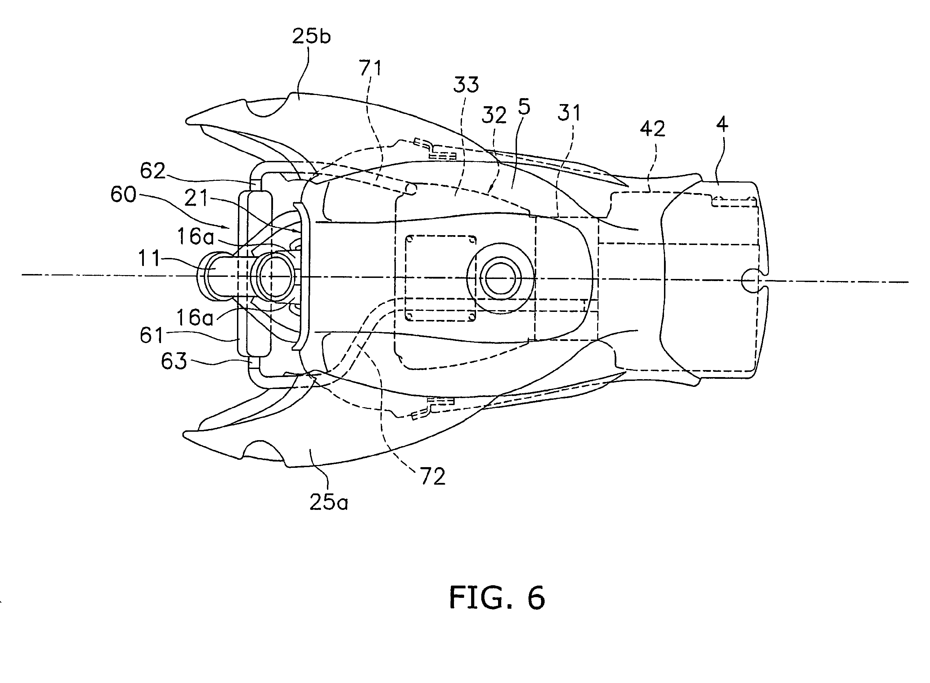

FIGS.4 to 6 illustrate a motorcycle 1b according to a second embodiment of the present invention. Specifically, FIG. 4 is a side view of the motorcycle 1b. FIG.5 is a front view of a part of the motorcycle 1b. FIG.6 is a plan view of a part of the motorcycle 1b. It should be noted that an identical reference numeral is given to components shared by the motorcycle 1b illustrated in FIGS.4 to 6 and the motorcycle 1a of the first embodiment.

In the motorcycle 1b, the catch tank 60 is positioned to the forward of the cylinder portion 32 and is disposed so as not to overlap with the cylinder portion 32 in a plan view. Specifically, the catch tank 60 is disposed to the forward of the cylinder portion 32 in a plan view, as illustrated in FIG.6. The catch tank 60 is positioned lower than the head pipe 11. The upper portion of the catch tank 60 is positioned higher than the front wheel 6 in a side view. As illustrated in FIG.5, the catch tank 60 is partially disposed between the left shock absorber 18a and the right shock absorber 18b. Further, the catch tank 60 is partially positioned lower than the bracket 19 but higher than the front fender 8. In a front view of the vehicle body, the catch tank 60 is thereby disposed in a viewable position. Further, the catch tank 60 is positioned higher than the exhaust pipe 36. The catch tank 60 is positioned to the forward of the fuel tank 5, and is disposed between the left cover member 25a and the right cover member 25b in the transverse direction.

As illustrated in FIGS. 5 and 6, the catch tank 60 is elongated further in the transverse direction than in the vertical direction. Further, the catch tank 60 is elongated further in the vertical direction and the transverse direction than in the longitudinal direction. Yet further, the catch tank 60 is thinly shaped in the longitudinal direction.

The first connection port 62 of the catch tank 60 is provided to one lateral surface, specifically, a right lateral surface of the tank body 61. One end of the first hosepipe 71 is connected to the first connection port 62. The other end of the first hosepipe 71 is connected to the cylinder head 33 of the engine 3. The first hosepipe 71 is extended from the cylinder head 33 to the forward while passing beneath the fuel tank 5.

The second connection port 63 is provided to the other lateral surface, specifically, a left lateral surface of the tank body 61. The second connection port 63 is positioned higher than the first connection port 62. One end of the second hosepipe 72 is connected to the second connection port 63. The other end of the second hosepipe 72 is connected to the air cleaner 42. The second hosepipe 72 is extended in the longitudinal direction while passing above the engine 3. The second hosepipe 72 is disposed along the first portion 16a of the front frame 16. The second hosepipe 72 is supported by plural support portions (not illustrated in the figure) provided to the first portion 16a. The second hosepipe 72 is bent to the transversely outward in front of the cylinder portion 32, and is then extended towards the second connection port 63.

Other structures of the motorcycle 1b are the same as those of the motorcycle 1a of the first embodiment.

According to the motorcycle 1b of the present embodiment, the catch tank 60 is disposed in front of the cylinder portion 32 in a plan view. Therefore, the catch tank 60 is disposed to the forward of the cylinder portion 32, and is disposed so as not to overlap with the cylinder portion 32 in a plan view. Therefore, cooling performance of the catch tank 60 can be also improved in the motorcycle 1b of the present embodiment just the same as the motorcycle 1a of the first embodiment. Therefore, it is possible to efficiently separate alcohol from blow-by gas while enlargement of the vehicle can be inhibited.

According to the motorcycle 1b of the present embodiment, the second hosepipe 72, connecting the catch tank 60 and the intake path 35, passes above the engine 3, just the same as the motorcycle 1a of the first embodiment. The structure can inhibit gaseous alcohol and gaseous gasoline, to be transferred from the catch tank 60 to the intake path 35, from being changed into a liquid state within the second hosepipe 72. Therefore, it is possible to efficiently return alcohol and gasoline, remained in a gaseous state without being separated as liquid, to the intake path 35.

According to the motorcycle 1b of the present embodiment, the catch tank 60 is elongated further in the transverse direction than in the vertical direction. Therefore, even if the catch tank 60 is disposed to the forward and upward of the engine 3, it is possible to inhibit the catch tank 60 from blocking wind flowing towards the engine 3 in travelling of the motorcycle 1b. Accordingly, cooling performance of the engine 3 can be improved. Further, the catch tank 60 is elongated further in the vertical direction and the transverse direction than in the longitudinal direction. Yet further, the catch tank 60 is thinly shaped in the longitudinal direction. Therefore, the catch tank 60 can ensure large surface area receiving wind in traveling of the motorcycle 1b. Cooling performance of the catch tank 60 can be thereby further improved. Consequently, it is possible to simultaneously achieve both cooling performance of the engine 3 and that of the catch tank 60 by wind in travelling of the motorcycle 1b.

### <Third Embodiment>

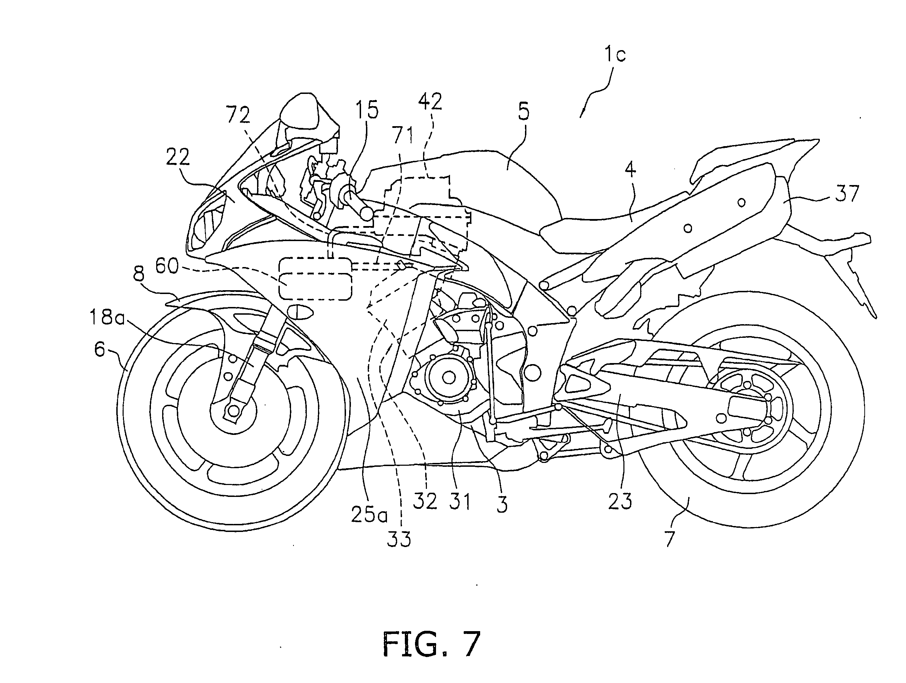

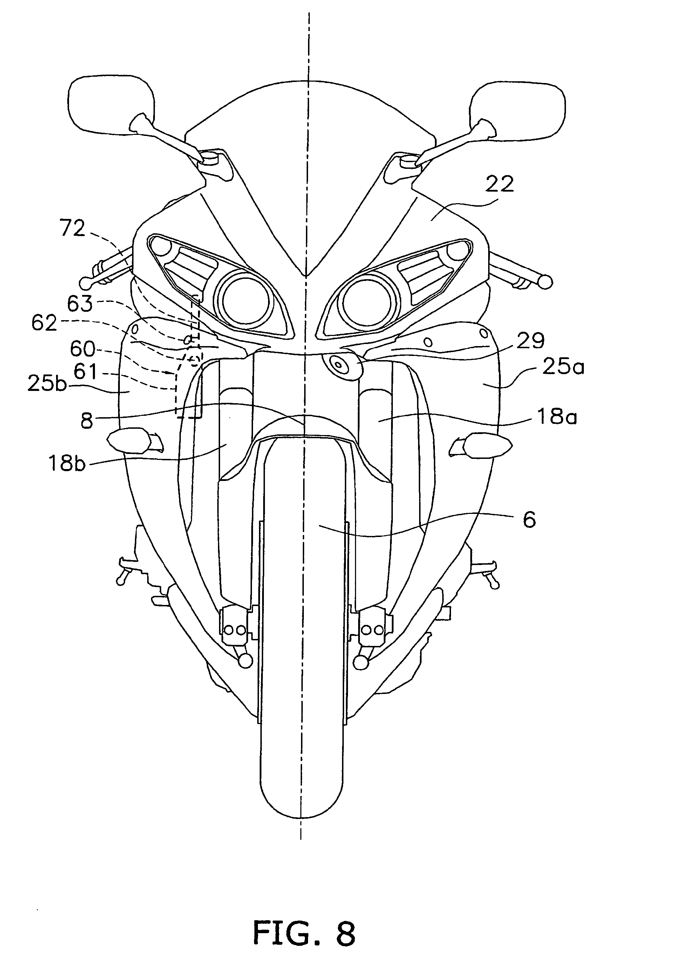

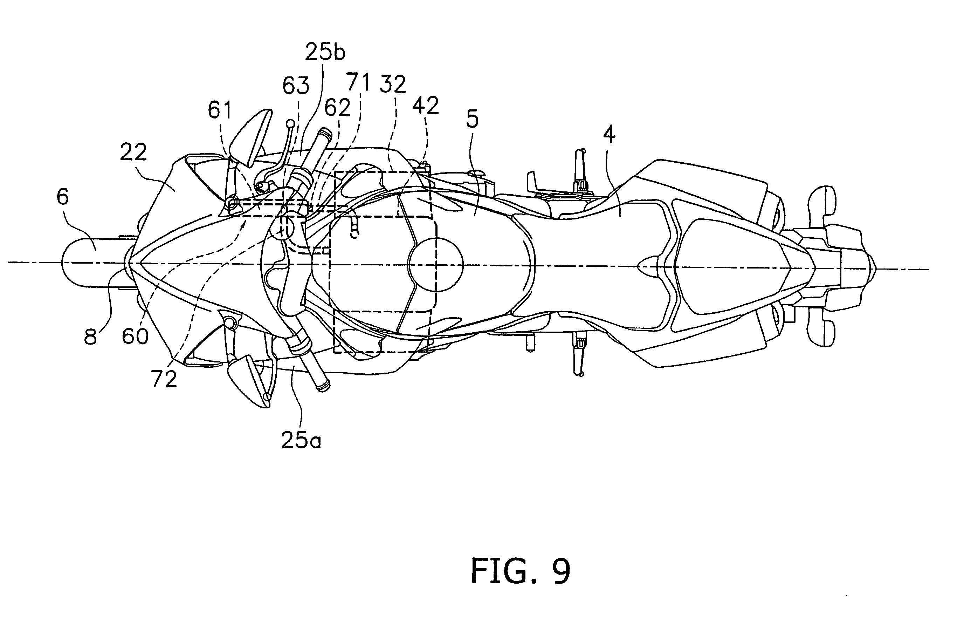

FIGS.7 to 9 illustrate a motorcycle 1c according to a third embodiment of the present invention. Specifically, FIG.7 is a side view of the motorcycle 1c. FIG.8 is a front view of the motorcycle 1c. FIG.9 is a plan view of the motorcycle 1c. It should be noted that an identical reference numeral is given to components shared by the motorcycle 1c illustrated in FIGS.7 to 9 and the motorcycle 1a of the first embodiment.

In the motorcycle 1c, the air cleaner 42 is disposed over the cylinder portion 32, and is positioned between the fuel tank 5 and the cylinder portion 32 in the vertical direction. The front portion of the air cleaner 42 is positioned immediately over the cylinder portion 32, whereas the rear portion of the air cleaner 42 is disposed to the rearward of the cylinder portion 32.

Further, a front cover member 22 is disposed in front of the handle 15. The right and left cover members 25b, 25a are linked to the front cover member 22 while being disposed in a longitudinal position range from the lateral to the cylinder portion 32 to the forward of the front fork 14. Yet further, the right and left cover members 25b, 25a are disposed in a vertical position range from a position above the engine 3 to a position below the engine 3.

As illustrated in FIG.9, the catch tank 60 is disposed to the forward of the cylinder portion 32, and is disposed so as not to overlap with the cylinder portion 32 in a plan view. Specifically, the catch tank 60 is disposed between the left cover member 25a and the right cover member 25b in the transverse direction. Further, the catch tank 60 is positioned lower than the air cleaner 42. In a front view, the catch tank 60 is disposed away from the vehicle-body center line in the transverse direction than the right shock absorber 18b is. In a front view, the catch tank 60 is partially positioned between the right cover member 25b and the right shock absorber 18b. In other words, the catch tank 60 is partially disposed in a viewable position in the front view of the vehicle. Further, the catch tank 60 is positioned higher than the front wheel 6 in a side view.

The catch tank 60 is elongated further in the longitudinal direction and the vertical direction than in the transverse direction. The catch tank 60 is thinly shaped in the transverse direction. Further, the catch tank 60 is elongated further in the longitudinal direction than in the vertical direction.

As illustrated in FIGS.8 and 9, the first connection port 62 is provided to the rear surface of the tank body 61. One end of the first hosepipe 71 is connected to the first connection port 62. The other end of the first hosepipe 71 is connected to the cylinder head 33 of the engine 3. The first hosepipe 71 is extended from the cylinder head 33 to the transversely outward, and is then bent to the forward.

The second connection port 63 is provided to the top surface of the tank body 61. The second connection port 63 is positioned higher than the first connection port 62. One end of the second hosepipe 72 is connected to the second connection port 63. The other end of the second hosepipe 72 is connected to the air cleaner 42. The second hosepipe 72 is extended in the longitudinal direction while passing above the engine 3. Further, the second hosepipe 72 is bent to the rightward from a position forward of the air cleaner 42. Yet further, the second hosepipe 72 is bent to the downward from a position above the tank body 61.

Other structures of the motorcycle 1c are the same as those of the motorcycle 1a according to the first embodiment.

The motorcycle 1c according to the present embodiment can achieve the same advantageous effects as those of the motorcycle 1a according to the first embodiment.

### <Fourth Embodiment>

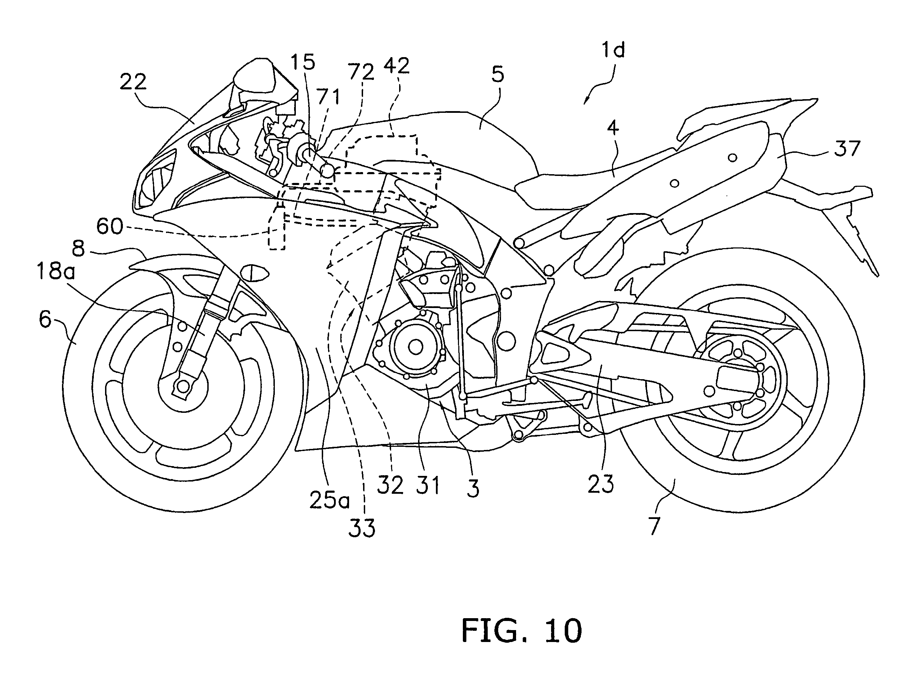

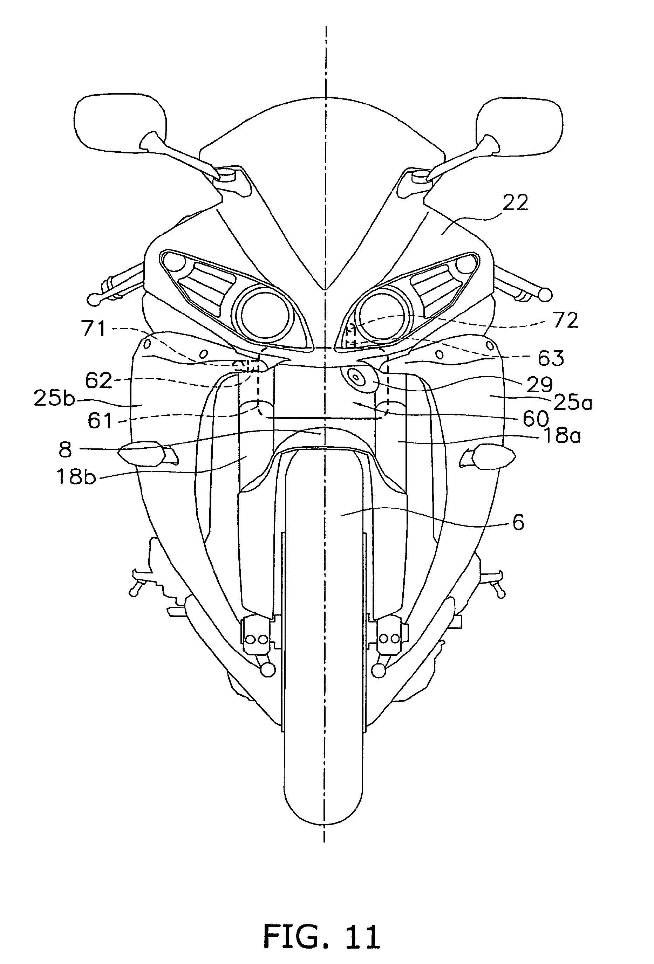

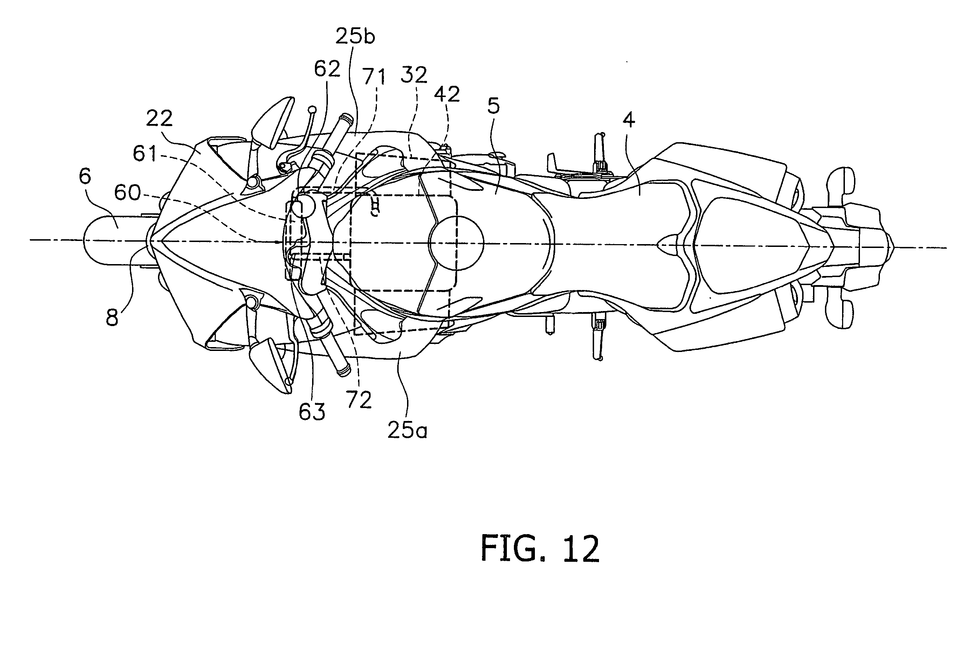

FIGS. 10 to 12 illustrate a motorcycle 1d according to a fourth embodiment of the present invention. Specifically, FIG.10 is a side view of the motorcycle 1d. FIG.11 is a front view of the motorcycle 1d. FIG.12 is a plan view of the motorcycle 1d. It should be noted that an identical reference numeral is given to components shared by the motorcycle 1d of the present embodiment, the motorcycle 1a of the first embodiment, and the motorcycle 1c of the third embodiment.

In the motorcycle 1d, the catch tank 60 is positioned to the forward of the cylinder portion 32, and is disposed so as not to overlap with the cylinder portion 32 in a plan view. Specifically, the catch tank 60 is disposed in front of the cylinder portion 32 in a plan view. The catch tank 60 is positioned higher than the front wheel 6 in a side view. The catch tank 60 is disposed between the left cover member 25a and the right cover member 25b in the transverse direction. Further, the catch tank 60 is partially disposed between the left shock absorber 18a and the right shock absorber 18b, as illustrated in FIG.11. Yet further, the catch tank 60 is partially disposed between the bottom end of the center portion of the front cover member 22 in the transverse direction and the front fender 8. In other words, the catch tank 60 is disposed in a viewable position in a front view of the vehicle.

The catch tank 60 is elongated further in the transverse direction than in the vertical direction. Further, the catch tank 60 is elongated further in the vertical direction and the transverse direction than in the longitudinal direction. Yet further, the catch tank 60 is thinly formed in the longitudinal direction.

The first connection port 62 is provided to one lateral surface, specifically, the right lateral surface of the tank body 61. One end of the first hosepipe 71 is connected to the first connection port 62. The other end of the first hosepipe 71 is connected to the cylinder head 33 of the engine 3. The first hosepipe 71 is extended from the cylinder head 33 to the transversely outward, then bent to the forward, and finally extended towards the right lateral surface of the tank body 61.

The second connection port 63 is provided to the top surface of the tank body 61. The second connection port 63 is positioned higher than the first connection port 62. One end of the second hosepipe 72 is connected to the second connection port 63. The other end of the second hosepipe 72 is connected to the air cleaner 42. The second hosepipe 72 is extended from the air cleaner 42 in the longitudinal direction while passing above the engine 3. The second hosepipe 72 is downwardly bent from a position above the tank body 61, and extended towards the top surface of the tank body 61.

Other structures of the motorcycle 1d are the same as those of the motorcycle 1c of the third embodiment.

The motorcycle 1d according to the fourth embodiment can achieve the same advantageous effects as those of the motorcycle 1b according to the second embodiment.

### <Other Embodiments>

The foregoing description relates to embodiments of the present invention. However, the present invention is not limited to the foregoing embodiments. Various changes can be made for the foregoing embodiments without departing from the scope of the present invention.
(a) In the foregoing embodiments, the catch tank 60 is entirely positioned to the forward of the cylinder portion 32. However, the catch tank 60 is not necessarily entirely positioned to the forward of the cylinder portion 32 as long as it is at least partially positioned to the forward of the cylinder portion 32. For example, in the first and third embodiments, the front portion of the catch tank 60 may be positioned to the forward of the cylinder portion 32, while the rear portion of the catch tank 60 may be positioned to the rearward of the front end of the cylinder portion 32.

(b) In the first and third embodiments, the catch tank 60 is disposed to the right of the vehicle-body center line in the transverse direction. However, the catch tank 60 may be disposed to the left of the vehicle-body center line. Specifically, in the first and third embodiments, the catch tank 60 is disposed between the right shock absorber 18b and the right cover member 25b in a front view. However, the catch tank 60 may be disposed between the left shock absorber 18a and the left cover member 25a.

(c) The catch tank 60 may be disposed in any suitable position as long as it is at least partially positioned higher than the front wheel 6. Therefore, the upper portion of the catch tank 60 may be positioned higher than the front wheel 6, while the lower portion of the catch tank 60 may be disposed in a position where it is vertically overlapped with the front wheel 6 in a front view.

(d) The second hosepipe 72 may not be connected to the air cleaner 42. In the intake path 35, the second hosepipe 72 may be connected to other component disposed in a more downstream position than the air cleaner 42 in the airflow direction. Further, in the foregoing embodiments, the second hosepipe 72 is convexly curved to the upward. However, the second hosepipe 72 may have a linear shape. The structure can also inhibit accumulation of liquid alcohol within the second hosepipe 72.

(e) In the foregoing embodiments, the first hosepipe 71 is connected to the cylinder head 33. However, the first hosepipe 71 may be connected to the crank case 31.

(f) Apart from the first path, a path may be provided for connecting the crank case 31 and the lower portion of the catch tank 60. The structure can return alcohol and gasoline, changed into a liquid state within the catch tank 60, to the crank case 31. In this case, the returned alcohol and gasoline are changed into a gaseous state within the crank case 31 and are again processed as blow-by gas. Further, a breather structure may be provided to the bottom portion of the catch tank 60 for discharging alcohol and gasoline, accumulated within the catch tank 60, to the outside.

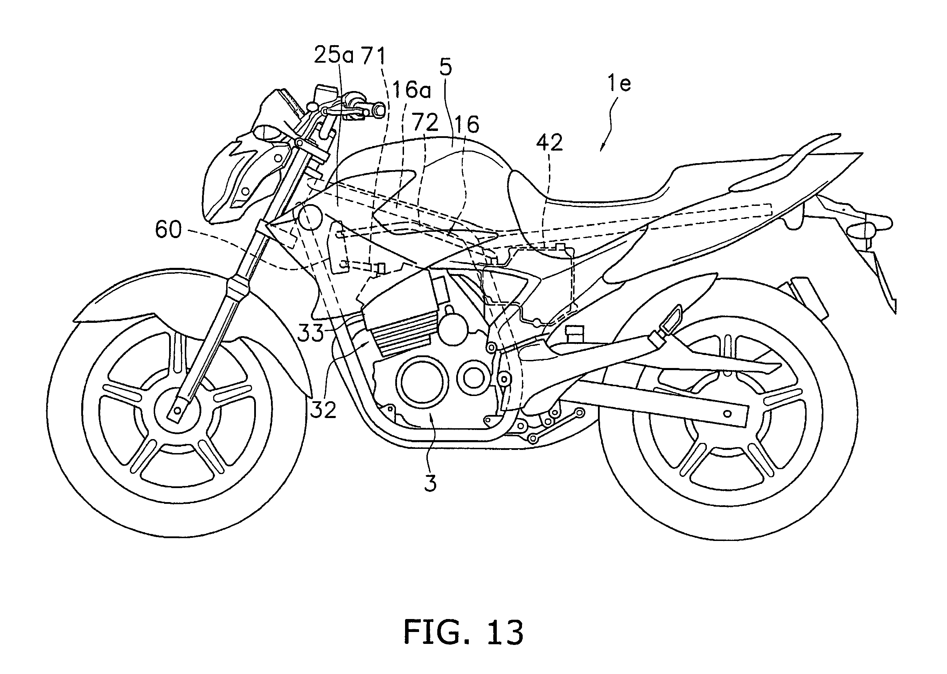

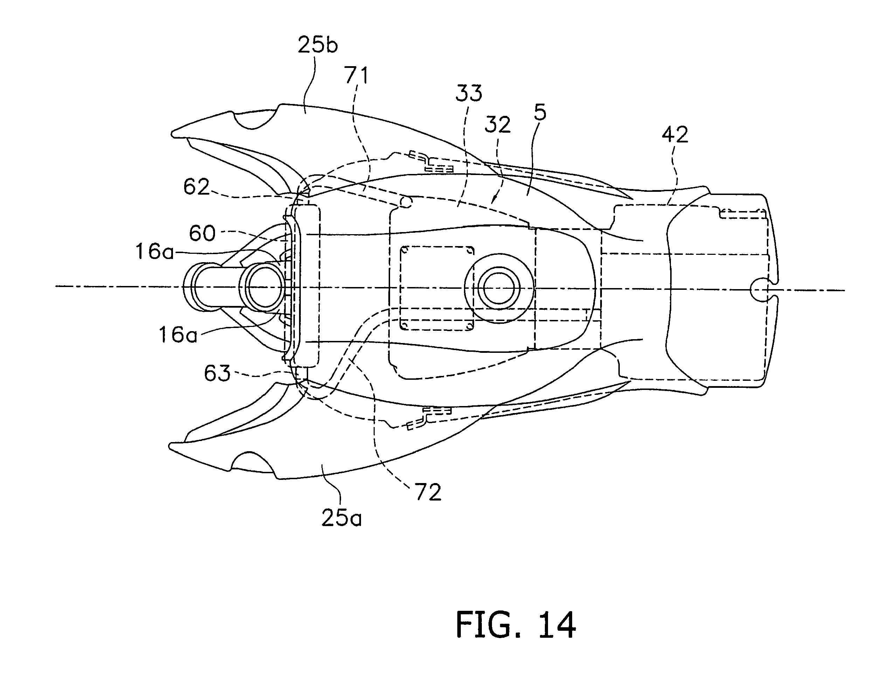

(g) As seen in a motorcycle 1e illustrated in FIGS.13 and 14, the catch tank 60 may be disposed in a space between the engine 3 and the first portion 16a of the front frame 16. Further, the catch tank 60 may be disposed between the left cover member 25a and the right cover member 25b in the transverse direction, while being disposed beneath the fuel tank 5. In this case, the catch tank 60 is also disposed in a position where it receives less thermal impact of the engine 3 and easily receives wind in travelling of the motorcycle 1e. Therefore, cooling performance of the catch tank 60 can be improved.

### INDUSTRIAL APPLICABILITY

The present invention has an advantageous effect of efficiently separating alcohol from blow-by gas and while inhibiting enlargement of a vehicle. Therefore, the present invention is useful for the motorcycles.

### EXPLANATION OF THE REFERENCE NUMERALS

- 3: Engine
- 5: Fuel tank
- 6: Front wheel
- 14: Front fork
- 16: Front frame (Vehicle body frame)
- 21: Recess
- 25a: Left cover member
- 25b: Right cover member
- 31: Crank case
- 32: Cylinder portion
- 35: Intake path
- 36: Exhaust pipe
- 42: Air cleaner
- 60: Catch tank (Separation device)
- 71: First hosepipe (First path)
- 72: Second hosepipe (Second path)

## Claims

1. A motorcycle, comprising:
an engine (3) including a cylinder portion (32) a crank case (31);
an intake path (35) connected to the cylinder portion (32);
an air cleaner (42) provided to the intake path (35), the air cleaner (42) at least partially disposed to the rearward in the direction of riding of the cylinder portion (32);
a blow-by gas separation device (60) at least partially disposed to the forward of the cylinder portion;
a first path (71) connecting the inside of the crank case (31) and the separation device (60); and
a second path (72) passing above the engine (3), the second path (72) connecting the separation device (60) and the intake path (35), **characterized by** the separation device (60) disposed so as not to overlap with the cylinder portion (32) in a plan view.

2. The motorcycle according to claim 1, further comprising:
a fuel tank disposed over the engine,
wherein the separation device is disposed lateral to the fuel tank in a plan view.

3. The motorcycle according to claim 1, further comprising:
a fuel tank disposed over the engine; and
a pair of a right cover member and a left cover member extended from the fuel tank to the forward, the right and left cover members at least partially positioned lateral to the fuel tank,
wherein the separation device is disposed between the right cover member and the left cover member in a transverse direction of the motorcycle.

4. The motorcycle according to claim 3, further comprising:
a front wheel disposed to the forward of the engine; and
a pair of a right shock absorber and a left shock absorber supporting the front wheel in a rotatable state,
wherein the separation device is disposed between the left shock absorber and the left cover member or between the right shock absorber and the right cover member in a front view.

5. The motorcycle according to claim 1, wherein the separation device is disposed to the forward of the cylinder portion.

6. The motorcycle according to claim 5, further comprising:
a vehicle body frame disposed over the engine,
wherein the separation device is disposed between the vehicle body frame and the engine.

7. The motorcycle according to claim 5, wherein the separation device is elongated further in a transverse direction of the motorcycle than in a vertical direction.

8. The motorcycle according to claim 5, further comprising:
a fuel tank disposed over the engine; and
a pair of a right cover member and a left cover member extended from the fuel tank to the forward, the right and left cover members at least partially disposed lateral to the fuel tank,
wherein the separation device is disposed between the right cover member and the left cover member in a transverse direction of the motorcycle.

9. The motorcycle according to claim 1, further comprising:
an exhaust pipe connected to the front surface of the cylinder portion,
wherein the separation device is positioned higher than the exhaust pipe.

10. The motorcycle according to claim 1, further comprising:
a fuel tank disposed over the engine, the fuel tank including a recessed portion on the bottom surface thereof, the recessed portion upwardly recessed and extended in a longitudinal direction of the motorcycle; and
a vehicle body frame disposed in a space surrounded by the recessed portion, the vehicle body frame extended in the longitudinal direction of the motorcycle,
wherein the second path is partially disposed along the vehicle body frame.

11. The motorcycle according to claim 1, wherein the second path does not include a portion convexly flexed to the downward.

12. The motorcycle according to claim 1, wherein the
separation device is at least partially disposed in a viewable position in a front view.

13. The motorcycle according to claim 1, further comprising:
a front wheel disposed to the forward of the engine,
wherein the separation device is partially at least positioned higher than the front wheel in a side view.

## Patentansprüche

1. Ein Motorrad, das folgende Merkmale aufweist:
einen Motor (3), der einen Zylinderabschnitt (32) und ein Kurbelgehäuse (31) umfasst;
einen Ansaugweg (35), der mit dem Zylinderabschnitt (32) verbunden ist;
ein Luftfilter (42), das an dem Ansaugweg (35) vorgesehen ist, wobei das Luftfilter (42) in der Fahrtrichtung zumindest teilweise weiter hinten angeordnet ist als der Zylinderabschnitt (32);
eine Leckgas-Trennvorrichtung (60), die zumindest teilweise weiter vorne angeordnet ist als der Zylinderabschnitt;
einen ersten Weg (71), der die Innenseite des Kurbelgehäuses (31) und die Trennvorrichtung (60) verbindet; und
einen zweiten Weg (72), der über dem Motor (3) verläuft, wobei der zweite Weg (72) die Trennvorrichtung (60) und den Ansaugweg (35) verbindet, **dadurch gekennzeichnet**
**dass** die Trennvorrichtung (60) angeordnet ist, um in einer Draufsicht den Zylinderabschnitt (32) nicht zu überlappen.

2. Das Motorrad gemäß Anspruch 1, das ferner folgendes Merkmal aufweist:
einen Kraftstofftank, der über dem Motor angeordnet ist,
wobei die Trennvorrichtung in einer Draufsicht lateral zu dem Brennstofftank angeordnet ist.

3. Das Motorrad gemäß Anspruch 1, das ferner folgende Merkmale aufweist:
einen Kraftstofftank, der über dem Motor angeordnet ist; und
ein Paar aus einem rechten Abdeckungsbauglied und einem linken Abdeckungsbauglied, die sich von dem Kraftstofftank nach vorne erstrecken, wobei das rechte und das linke Abdeckungsbauglied zumindest teilweise lateral zu dem Kraftstofftank angeordnet sind,
wobei die Trennvorrichtung in einer Querrichtung des Motorrads zwischen dem rechten Abdeckungsbauglied und dem linken Abdeckungsbauglied angeordnet ist.

4. Das Motorrad gemäß Anspruch 3, das ferner folgende Merkmale aufweist:
ein Vorderrad, das weiter vorne angeordnet ist als der Motor; und
ein Paar aus einem rechten Stoßdämpfer und einem linken Stoßdämpfer, die das Vorderrad in einem drehbaren Zustand tragen,
wobei die Trennvorrichtung in einer Vorderansicht zwischen dem linken Stoßdämpfer und dem linken Abdeckungsbauglied oder zwischen dem rechten Stoßdämpfer und dem rechten Abdeckungsbauglied angeordnet ist.

5. Das Motorrad gemäß Anspruch 1, bei dem die Trennvorrichtung weiter vorne angeordnet ist als der Zylinderabschnitt.

6. Das Motorrad gemäß Anspruch 5, das ferner folgendes Merkmal aufweist:
einen Fahrzeugkörperrahmen, der über dem Motor angeordnet ist,
wobei die Trennvorrichtung zwischen dem Fahrzeugkörperrahmen und dem Motor angeordnet ist.

7. Das Motorrad gemäß Anspruch 5, bei dem die Trennvorrichtung in einer Querrichtung des Motorrads länger ist als in einer Vertikalrichtung.

8. Das Motorrad gemäß Anspruch 5, das ferner folgende Merkmale aufweist:
einen Kraftstofftank, der über dem Motor angeordnet ist; und
ein Paar aus einem rechten Abdeckungsbauglied und einem linken Abdeckungsbauglied, die sich von dem Kraftstofftank nach vorne erstrecken, wobei das rechte und
das linke Abdeckungsbauglied zumindest teilweise lateral zu dem Kraftstofftank angeordnet sind,
wobei die Trennvorrichtung in einer Querrichtung des Motorrads zwischen dem rechten Abdeckungsbauglied und dem linken Abdeckungsbauglied angeordnet ist.

9. Das Motorrad gemäß Anspruch 1, das ferner folgende Merkmale aufweist:
ein Abgasrohr, das mit der Vorderoberfläche des Zylinderabschnitts verbunden ist,
wobei die Trennvorrichtung höher angeordnet ist als das Abgasrohr.

10. Das Motorrad gemäß Anspruch 1, das ferner folgende Merkmale aufweist:
einen Kraftstofftank, der über dem Motor angeordnet ist, wobei der Kraftstofftank einen ausgenommenen Abschnitt auf der Unteroberfläche desselben aufweist, wobei der ausgenommene Abschnitt nach oben ausgenommen ist und in einer Längsrichtung des Motorrads verlängert ist; und
einen Fahrzeugkörperrahmen, der in einem Raum angeordnet ist, der von dem ausgenommenen Abschnitt umgeben ist, wobei der Fahrzeugkörperrahmen in der Längsrichtung des Motorrads verlängert ist,
wobei der zweite Weg teilweise entlang dem Fahrzeugkörperrahmen angeordnet ist.

11. Das Motorrad gemäß Anspruch 1, bei dem der zweite Weg keinen Abschnitt umfasst, der konvex nach unten gebogen ist.

12. Das Motorrad gemäß Anspruch 1, bei dem die Trennvorrichtung in einer Vorderansicht zumindest teilweise in einer sichtbaren Position angeordnet ist.

13. Das Motorrad gemäß Anspruch 1, das ferner folgendes Merkmal aufweist:
ein Vorderrad, das weiter vorne angeordnet ist als der Motor,
wobei die Trennvorrichtung in einer Seitenansicht zumindest teilweise höher angeordnet ist als das Vorderrad.

## Revendications

1. Motocyclette, comprenant:
un moteur (3) comportant une partie de cylindre (32) et un carter (31):
un trajet d'entrée (35) connecté à la partie de cylindre (32);
un nettoyeur d'air (42) prévu sur le trajet d'entrée (35), le nettoyeur d'air (42) étant disposé au moins partiellement vers l'arrière, dans la direction de conduite, de la partie de cylindre (32);
un dispositif de séparation par soufflage de gaz (60) disposé au moins partiellement vers l'avant de la partie de cylindre;
un premier trajet (71) connectant l'intérieur du carter de vilebrequin (31) et le dispositif de séparation (60); et
un deuxième trajet (72) passant au-dessus du moteur (3), le deuxième trajet (72) connectant le dispositif de séparation (60) et le trajet d'entrée (35),
**caractérisée par le fait que** le dispositif de séparation (60) est disposé de manière à ne pas venir en recouvrement avec la partie de cylindre (32), en vue en plan.

2. Motocyclette selon la revendication 1, comprenant par ailleurs:
un réservoir à carburant disposé au-dessus du moteur,
dans laquelle le dispositif de séparation est disposé latéralement par apport au réservoir à carburant, en vue en plan.

3. Motocyclette selon la revendication 1, comprenant par ailleurs:
un réservoir à carburant disposé au-dessus du moteur; et
une paire d'élément de couvercle droit et d'élément de couvercle gauche s'étendant du réservoir à carburant vers l'avant, les éléments de couvercle droit et gauche étant positionnés au moins partiellement latéralement par rapport au réservoir à carburant,
dans laquelle le dispositif de séparation est disposé entre l'élément de couvercle droit et l'élément de couvercle gauche, dans une direction transversale de la motocyclette.

4. Motocyclette selon la revendication 3, comprenant par ailleurs:
une roue avant disposée vers l'avant du moteur, et
une paire d'un amortisseur droit et d'un amortisseur gauche supportant la roue avant de manière a pouvoir tourner,
dans laquelle le dispositif de séparation est disposé entre l'amortisseur gauche et l'élément de couvercle gauche ou entre l'amortisseur droit et l'élément de couvercle droit, en vue frontale.

5. Motocyclette selon la revendication 1, dans laquelle le dispositif de séparation est disposé vers l'avant de la partie de cylindre.

6. Motocyclette selon la revendication 5, comprenant par ailleurs:
un cadre de corps de véhicule disposé au-dessus du moteur,
dans laquelle le dispositif de séparation est disposé entre le cadre de corps de véhicule et le moteur.

7. Motocyclette selon la revendication 5, dans laquelle le dispositif de séparation est plus allongée dans la direction transversale de la motocyclette que dans une direction verticale.

8. Motocyclette selon la revendication 5, comprenant par ailleurs:
un réservoir à carburant disposé au-dessus du moteur; et
une paire d'élément de couvercle droit et d'élément de couvercle gauche étendus du réservoir à carburant vers l'avant, les éléments de couvercle droit et gauche, étant au moins partiellement disposés latéralement par rapport au réservoir à carburant,
dans laquelle le dispositif de séparation est disposé entre l'élément de couvercle droit et l'élément de couvercle gauche, dans une direction transversale de la motocyclette.

9. Motocyclette selon la revendication 1, comprenant par ailleurs:
un tuyau d'échappement connecté à la surface avant de la partie de cylindre.
dans laquelle le dispositif de séparation est positionné plus haut que le tuyau d'échappement.

10. Motocyclette selon la revendication 1, comprenant par ailleurs:
un réservoir à carburant disposé au-dessus du moteur, le réservoir à carburant comportant une partie en retrait sur sa surface inférieure, la partie en retrait étant en retrait vers le haut et s'étendant dans une direction longitudinale de la motocyclette; et
un cadre de corps du véhicule disposé dans un espace entouré par la partie en retrait, le cadre de corps de véhicule s'étendant dans la direction longitudinale de la motocyclette,
dans laquelle le deuxième trajet est disposé partiellement le long du cadre de corps de véhicule.

11. Motocyclette selon la revendication 1, dans laquelle le deuxième trajet ne comporte pas de partie courbée de manière convexe vers le bas.

12. Motocyclette selon la revendication 1, dans laquelle le dispositif de séparation est disposé au moins partiellement dans une position visible en vue de face.

13. Motocyclette selon la revendication 1, comprenant par ailleurs:
une roue avant disposée vers l'avant du moteur,
dans laquelle le dispositif de séparation est au moins partiellement positionné plus haut que la roue avant, en vue latérale.
